# EUROPEAN PATENT APPLICATION

(11) **EP 0 642 098 A2**
(43) Date of publication of application: **08.03.1995**
(21) Application number: 94810433.6
(22) Date of filing: 21.07.1994
(51) Int. Cl.: G06K 19/06, G07F 7/12

(54) **Fraud-and counterfeit-proof financial service card**

(30) Priority: 13.08.1993 IT VA930017
(71) Applicant: ARYSEARCH ARYLAN AG, FL-9490 Vaduz (LI)
(72) Inventor: Benardelli, Giovanni, Dr., CH-6866 Meride (CH)

(57) **Abstract**

A financial service plastic card, which is fraud - and counterfeit - proof, is provided, consisting of two plastic card elements (1) and (3), destined to be separately despatched to the cardholder, the first of which bears on the respective memory zone (2) an encoding to operate the account as a financial service card but unable yet to activate the latter and the second bears on the respective memory zone (4) an encoding acting as a key to activate said account before the first transaction is completed. Only through the consecutive reading of the encodings of the two card elements at the first transaction the first card element (1) turns into an effective financial service card for all transactions. A numbered seal (5) provisionally carried by the second card element (3) is adhesively transposed on the first element (1), before said reading, and serves to protect the signature on the proper panel (6) of said first element for guaranteeing the validity of the authorized signature.

## Description

The present invention refers to financial service cards, as credit cards and debit cards, made of plastic material and provided with a memory zone, and more precisely it regards devices to prevent fraud with said payment means, and the counterfeiting thereof.

The fraudulent transactions made with financial service cards often depend from a faulty or neglected identification of the presenter, who can achieve his goals with a forged apocryphal signature, expecially by the means of a financial service card diverted from the mail before it arrives into the cardholder's possession.

The need of preventing said drawbacks is obvious.

A common interest exists that newly emitted or re-issued financial service cards cannot be used until they have come into the cardholder's possession and that the presenters of said financial service cards may be actually identified as the legitimate cardholders for all financial service cards transactions completed before a merchant.

For the sake of semplicity in the description the expression "financial service card" has been hereinafter substituted by the word "card".

The primary purpose of the invention is to bring forth a financial service card, which cannot be used before it has come in the cardholder's possession and without express validation of the latter.

Another purpose of the invention is that the merchant can realize from said card whether the presenter actually is, or is not, the legitimate cardholder.

A further purpose of the invention is that the merchant can verify signature correspondence on transaction records with the authorized signature on the signature panel of said card.

The published French application N°2,638,002 teachs a provisional combination of two plastic cards, namely a user card and a habilitation card, each provided with encodable zone, intended for personalizing the user card for cultural and social services through the transfer of data from the chips of the habilitation card to the chips of the user card.

Object of the present invention is a fraud- and counterfeit- proof financial service plastic card, as a credit card and a debit card, which is characterized by the fact that such card consists of a provisional combination of two plastic card elements in a manner known per se both provided with a memory zone, as a magnetic strip, chips an the like, of which the first card element, namely a user card, bears on the respective memory zone a standard encoding to operate the cardholder's account in a host-computer but enabled yet to activate said account and the second card element, namely an activating card, bears on the respective memory zone an encoding acting as a complementary key to activate the cardholder's account, only before the first transaction can be completed. Said complementary card elements are destined to be separately despatched to the cardholder, so that only through the consecutive reading of the encodings of the two card elements at the first transaction the account is rendered operative. In this way the first card element turns into an effective financial service card for using said account, while the activating second card element is kept at side.

According to another embodiment of the invention the financial service card is characterized by the fact that the second card element provisionally carries a security transparent seal, which, before the consecutive reading of the two encodings, is adhesively transposed on the signature panel of the first card element to protect the authorized signature and which consists of a fragile transparent inking and varnishing multilayer lamina provisionally anchored on one face of the second card element and coated with an adhesive layer protected by a liner on its free side. Said lamina incorporates a reference number corresponding to one of the numbers appearing on the financial service card.

According to a further embodyment of the present invention the financial service card is characterized by the fact that the memory zone of the second card element also bears an encoding to eventually block the cardholder's account when read through a network card terminal.

According to another embodyment of the invention the second card element can be later used for other purposes, e.g. to report the loss of the card or to identify the cardholder in other circumstances within the logic and legitimate interest of the issuer.

The second card element is provided with a fragile adhesive inking and varnishing multilayer lamina corresponding in size to the signature panel of the financial service card, while the adhesive side of said lamina is protected by a release liner. The flat seal carrier, namely the second card element, must be manually combined in register to the first card element, after the release liner has been removed, in order to place said laminar seal on the signature panel of the first card element on the signed signature panel.

By exhibiting the first card element, namely the financial service card with the thereon applied seal, it appears evident that the cardholder came in possession of his financial service card and that the signature appearing on the card panel under the transparent seal is the authorized signature.

Therefore the presence of the numbered seal lamina on the financial service card constitutes a necessary condition for completing a transaction and consequently a financial service card without the cardholder's numbered validation seal must not be accepted by the merchant. The authorized signature protected by the seal constitutes a univocal reference for the entire duration of card validity in verifying the signature extended on the transaction records. Attempts to make use of a financial service card with missing signature, with altered signature or refabricated signature panel are frustrated.

Only by presenting both card elements at a point of transaction the cardholder can at first activate his own account.
When necessary, the account may be blocked by having the second card element read again at a network card terminal.

The reference number of the seal corresponds to one of the numbers controlable on the first card element and namely the number of the same card or a portion thereof or the expiration date or so on.

The seal adhesive lamina, once applied, can not be removed without being destroyed from the card signature panel in view of an alteration of the signature with a subsequent reposition of the seal. In fact said lamina is constituted of a inking and varnishing multilayer which is insubstantial in physical size so that it is fragile, namely subject to being ripped into small fragments, when removed.

Practically the peculiar characteristics of the invention consists in the employment of a financial service card, as a credit or a debit card, which is associated to an auxiliary card, namely to an activating card. In order to prevent fraud and counterfeiting, said cards, bearing complementary encodings on their memory zones, are separately dispatched to cardholders, so that only through the combination of the encodings of the rispective memory zones the account can be activated and by the reading of the encoded memory zone of the second card element only it can be eventually disactivated, without adding however any operative data to the encoded memory zone of the financial service card, which for his full employment remains such as it was emitted by the issuer.

The laminar seal provisionally carried by the auxiliary card is to be transposed to the financial service card in order to protect the signature extended on the latter. Said card and said seal have a numeric analogy ascertained, which is predetermined through an algorithm chosen by the issuer.

The present invention will be more clearly understood through a detailed description, which is hereafter exposed with reference to the drawing, where:

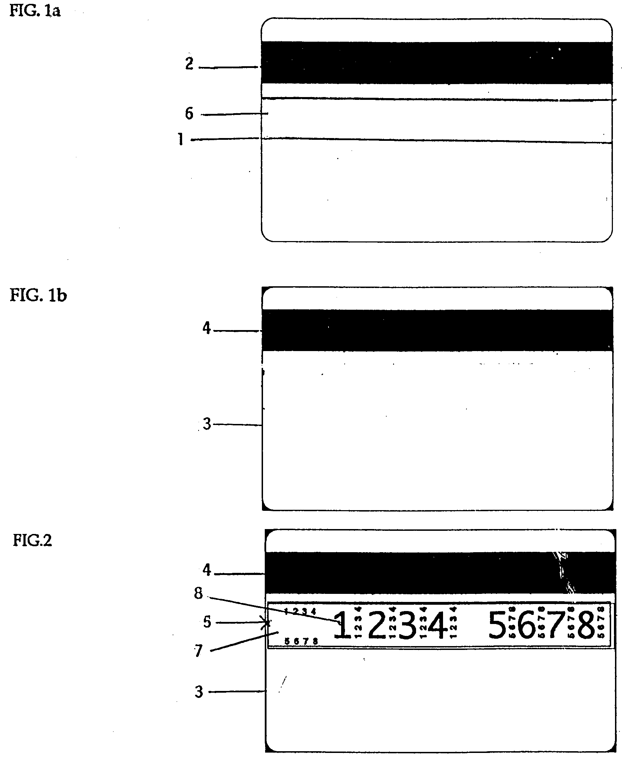

- fig. 1 a): is a top view of the first card element of the financial service card;
- fig. 1 b): is a top view of the second card element of said card;
- fig. 2: is a top view of the second card element provisionally bearing the seal;

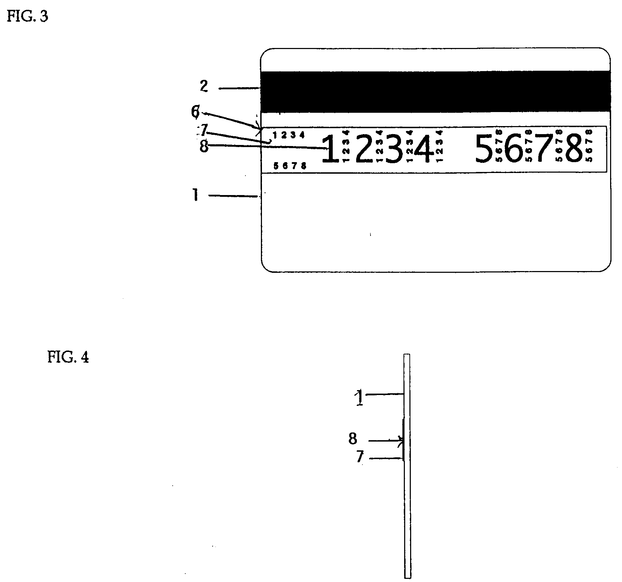

- fig. 3: is a top view of the first card element bearing the seal and
- fig. 4: is a lateral view of the first card element with the seal.

As it results from the figures, the financial service card, as a credit card or a debit card, provided with a memory zone as a megnetic strip, appears in two plastic card elements (1) and (3), which bear respective complementary encoding on their magnetic strips (2) and (4): this combination,which is provisional, is due for purpose of preventing fraud with said payment means and the counterfeiting thereof.

The encodings of the magnetic strips (2) and (4) of the two card elements are complementary in the sense that the first card element (1), namely the user card, has on the magnetic strip (2), a standard encoding able to operate the cardholder's account in a host-computer (not shown in the figures), as a financial service card, but enabled yet to activate said account, and the second card element (3), namely the activating card, bears on the magnetic strip (4), an encoding acting as a complementary key to activate said account only before the first transaction can be completed, so that only through the consecutive reading of the encodings of the two card elements at the first transaction the account is rendered operative for said transaction and for the subsequent transactions. In this way the first card element turns into an effective financial service card for using said account and the second card is kept at side.

In this conditions the first card element (1) can not, for itself, be operative, so that its despatch to the cardholder does not expose it to any risk of fraud and counterfeiting, because also in the case of theft said card element can not be used in any way to the effect of completing a transaction.

In a posterior moment the second card element (3) having a magnetic strip (4) only with an encoding reporting an activating message is separately delivered to the cardholder. Also this element (3) is not operative for itself and therefore its despatch does not expose the card to any risk fraud or counterfeiting as it does not feature the cardholder account number, and can however expediently bear the personal identification number.

Only through the consecutive reading of the complementary encodings of the magnetic strips (2) and (4) respectively of the two card elements (1) and (3) the operation of the account is obtained. While the second element ceases to be used for further transactions, the continuous use of the first element (1) is afforded, which now becomes operative as a financial service card.

In order to radically prevent fraud and counterfeiting the financial service card is provided with an adhesive security seal (5) for the certification of the cardholder's signature. Practically, such seal (5) is a lamina, which is provisionally supported by the second card element (3). Before the consecutive reading of the complementary magnetic encodings, said laminar seal is adhesively transposed on to the first card element (1), already completed with the authorized signature, so that said seal acts as a protection of the same signature. More precisely the seal (5) is placed on the signature already extended on the proper panel (6) of the card element (1).

The seal (5) consists of a fragile trasparente inking and varnishing multilayer lamina (7), provisionally anchored on one face of the second card element (3) and is coated with an adhesive layer protected by a release liner (not shown in the figures) on its free side.
Said seal is covered by the published European Patent Application N. 496180 A2 of the same Applicant.

The seal (5) bears on its lamina (7) an evident numeric reference (8), for istance corresponding to the number of the financial service card or to a portion of said number or to the expiration date.

Once transposed on the signature's panel (6) of the first card element (1) the inking and varnishing multilayer lamina (7) of the seal (5), which bears the reference number (8), is durable and unaffected by water; it is characterized by a low absorption of humidity as well as by a resistance to chemicals and soiling.

The authorized signature protected by the seal (5) represents during the entire validity of the financial service card a sure reference at the moment of verifying the signature extended on the transaction records.

Said verification is made also by taking into account the numeric reference (8) in order to ascertain the correspondence of the digits of the card.

Therefore the seal (5) gives further security in the transaction and the resulting identification of the cardholder is more certain, because the same seal gives a protection which is to be referred with certainty to the person of the same cardholder. In fact each exemplar of the seal (5) is absolutely unique for the presence on it of the tamper-proof numeric sequence, matching for instance with the number of the financial service card.

## Claims

**1)** A financial service plastic card, as a credit card and a debit card, which is fraud- and counterfeit-proof and provided with a memory zone characterized by the fact that such card consists of a provisional combination of two plastic card elements (1) and (3) known per se both provided with a memory zone (2) and (4), as a magnetic strip, chips and the like, the first card element (1), namely a user card, bearing on the respective memory zone (2) a standard encoding to operate the cardholder account in a host-computer, but enabled yet to activate said account, and the second card element (3), namely an activating card, bearing on the respective memory zone (4) an encoding acting as a complementary key to activate the cardholder account, only before the first transaction can be completed, said complementary card elements being destined to be separately despatched to the cardholder, so that only through the consecutive reading of the encodings of the two card elements at the first transaction the account is rendered operative, so that the first card element turns into an effective financial service card for using said account, while the activating second card element is kept at side.

**2)** Financial service card in claim 1 characterized by the fact that the second card element (3) provisionally carries a security transparent seal (5), which before the consecutive reading of the two encodings is adhesively transposed on the signature panel of the first card element (1) to protect the authorized signature and which consists of a fragile transparent inking and varnishing multilayer lamina (7) provisionally anchored on one face of the second card element and coated with an adhesive layer protected by a liner on its free side, said lamina incorporating a reference number (8) corresponding to one of the numbers appearing on the financial service card.

**3)** A financial service plastic card as in claims 1 or 2 characterized by the fact that the memory zone of the second card element also bears an encoding to eventually block the cardholder's account when read through a network card terminal.

**4)** A financial service plastic card as in claims 1 to 3 characterized by the fact that the second card element can be later used for other purposes, e. g. to report the loss of the card or to identify the cardholder in other circumstances within the logic and legitimate interest of the issuer.
